# EUROPEAN PATENT SPECIFICATION

(11) **EP 3 154 158 B1**
(45) Date of publication and mention of the grant of the patent: **15.04.2020**
(21) Application number: 15189106.6
(22) Date of filing: 09.10.2015
(51) Int. Cl.: H02K 1/32, H02K 9/197, H02K 49/06, B60L 7/14, B60L 7/18, B60L 7/28, H02K 19/10, H02K 7/00, H02K 17/16

(54) **HYSTERESIS MOTOR-BRAKE**
HYSTERESEMOTORBREMSE
FREIN MOTEUR À HYSTÉRÉSIS

(43) Date of publication of application: 12.04.2017
(73) Proprietor: AVL List GmbH, 8020 Graz (AT)
(72) Inventor: DAVYDOV, Vitaly, 8020 GRAZ (AT); NISSEN, Peter-Jürgen, 8045 GRAZ (AT)
(74) Representative: Babeluk, Michael

(56) References cited:
- US-A- 1 448 700
- US-A1- 2011 057 522
- US-A1- 2011 169 353
- US-A1- 2012 112 578
- US-B1- 6 680 555

## Description

The invention relates to a motor-brake, comprising a rotating electric machine with stator and rotor, and a power converter, electrically connecting the stator of said electric machine to the DC link, wherein said stator comprises a core made of soft magnetic material and a plurality of coils connected to said power converter with opportunity of forming a multi-pole rotatable magnetic field in a stator bore; said rotor is concentrically arranged within a bore of said stator, and comprises a core and a shaft, connected to each other with capability of torque transfer; and said rotor comprises at least one channel for cooling media with at least one inlet at a first shaft end and at least one outlet at a second shaft end. The invention further relates to a method for operating this motor-brake.

The internet link http://www.magtrol.com/datasheets/ahb.pdf discloses a hysteresis motor with a stator and a rotor, wherein the rotor comprises a smooth cylinder consisting of a permanent-magnet alloy material and a nonmagnetic support. Another electromagnetic hysteresis unit is disclosed in US 6,680,555 B1.

US 2011/169353 A1 describes a motor generator with a stator and a rotor, wherein the rotor comprises at least one channel for cooling media with at least one inlet at a first shaft end and at least one outlet at a second shaft end.

US 2012/0112578 A1 describes a motor driven assembly with a motor shaft which is mounted for rotation about a rotational axis. A rotor is located radially about the shaft. A passage extends through the rotor alongside the motor shaft. A corrugated fin heat transfer structure is disposed within the passage radially aligned with the rotor.

US 1,448,700 A discloses a liquid cooled electric machine comprising a rotor cooling with supply and drain of cooling media through the shaft ends.

It is the object of the present invention to provide a high continuous braking power with very limited capacity of the power line. It is further an object of the present invention to enable high efficiency at driving modes, rotor stall modes and regenerative braking modes.

According to the invention this is achieved in that
- the motor brake is a hysteresis motor brake;
- the core of the rotor is made of hard magnetic material;
- the rotor shaft comprises an annular cooling jacket on its radial surface, and the rotor core is mounted on said rotor shaft in a way that the cooling media from the cooling jacket directly contacts to the inner surface of the rotor core, wherein the ends of the rotor core seal said cooling jacket on both sides; and
- the rotor shaft comprises at least one channel with at least one inlet and at least one outlet, wherein said inlet and outlet are hydraulically connected to said cooling jacket by pluralities of diagonal bores.

The direct contact of the cooling media with rotor core improves cooling capacity. Annular form of the cooling jacket reduces the parasitic volume of the cooling media, which is beneficial for unbalancing and swirl losses. Sealing on rotor core ends eliminates leakage of the cooling media, reducing the losses in the motor-brake.

The stator current of the hysteresis electric drive is almost proportional to the shaft torque and does not depend on slip. Back-EMF is almost proportional to the stator frequency (or stator field rotational speed). In high-slip braking modes with high rotor speed and smaller stator speed it is to dissipate the braking energy in the rotor core without strong impact on stator power. Like in hysteresis brakes with single coil, high braking power is available with low power in the stator power line (including DC link and power converter). Continuous operation in high-slip asynchronous modes is ensured by forced rotor cooling. Radial design with rotor inside stator is characterized with low inertia. Large number of poles leads to higher field frequency, which is important to reduce the required volume of the hard magnetic material for target torque value.

In order to improve efficiency the stator comprises semi-closed slots, the stator winding is double layer, and the coils are formed from rectangular copper wire. This design offers high fill factor of the stator slots, which enables a reduction of stator resistivity losses, thus increasing the efficiency of the electric drive at high torque driving modes. Semi-closed slots improve flux distribution in the air gap and increase average flux density. The rectangular bars with end turns may be inserted into stator slots and electrically connected on another end of the stator by soldering or welding (known as "hairpin" technology). Double layer winding with shortened pitch makes flux profile in the bore closer to sinusoidal. This reduces torque losses in asynchronous mode from higher flux harmonics.

Preferably the power converter comprises three-phase voltage-source inverter.

According to a preferred embodiment of the invention for high utilization of the magnetic material the rotor core is formed in tubular shape of anisotropic hard magnetic material, wherein the magnetic domains are oriented in a way that highest coercive force is directed along rotor circumference. Best magnetic energy utilization of the anisotropic hard magnetic alloys ensures high torque density of the electric machine. The magnetic flux in the rotor core of the electric machine with large number of poles is predominantly directed along circumference, therefore such orientation is beneficial. The tubular shape is optimal for high utilization of the magnetic material. Thin wall of the tube shortens the path for heat transfer from the core to cooled surface. All these features reduce rotor inertia and cost.

Preferably the rotor core comprises a plurality of teeth for torque transfer on one of the ends of the tube. Hard magnetic materials (e.g., Alnico) are characterized with fragility and limited tensile strength. High rotor losses in asynchronous braking mode lead to high thermal stress and deformation of the rotor core. Therefore, torque transfer by bonding, welding or shrink fit is not preferred for present invention. Radial splines in long and thin rotor core are hard to manufacture. End splines is a preferable solution, because the teeth may be casted with machining allowance to be then finally machined by grinding.

More preferably the rotor shaft may comprise one cylindrical inlet on one end and one cylindrical outlet on another end, said inlet and outlet are concentric to the shaft axis, wherein said inlet and outlet are hydraulically connected to the cooling jacket by pluralities of diagonal bores, arranged around shaft axis. The concentric arrangement of the inlet and outlet makes easy the supply and the drain of the cooling media by immovable inlet and outlet pipes with rotary seals. The diameter of the inlet and outlet openings should be minimized to reduce seal sliding velocity and cooling media swirl losses. The pluralities of diagonal bores are required to connect openings at small radius with cooling jacket at large radius with minimized hydraulic losses. They can be drilled from the outer radial shaft surface.

The leakage from the rotary seals can't be completely avoided. According to a preferred embodiment of the invention the rotor cooling media is a transmission oil. In that case leakage into the transmission housing is not critical.

According to a lightweight embodiment of the invention the rotor shaft further comprises a cavity formed around its axis and sealed from the cooling jacket. This cavity reduces rotor weight and inertia. It could be filled with air. The cavity may be formed in a single-piece shaft, e.g. by rolling. In a split shaft the cavity halves may be formed in both pieces and then it can be closed by bolt pattern, central thread or weld seam.

The rotor shaft further may comprise a pair of the bearings mounted on it, and positioning the rotor in the stator bore, wherein the bearing on the shaft side with the outlet is mounted by the means of a separation sleeve, made of the material with lower heat conductivity than of the steel. Drained cooling media might be heated up to high temperature levels in heavy braking modes. The Alnico magnet alloy is operable up to the temperatures of 400 ... 500 centigrade. There are high-temperature transmission oils, with working temperatures of up to 250 centigrade. The operating temperature of the steel rolling bearings with rolling parts of steel should operate at temperature below 150 centigrade to avoid annealing, therefore heat insulation might be necessary.

Further the hysteresis motor-brake may comprise a torque transfer device with a driving member (e.g. gearwheel or chain sprocket) fixed on the rotor shaft and the driven member (e.g. another gearwheel or chain sprocket), engageable to the driving member, wherein the rotational axis of the driven member is placed apart from the axis of the rotor. A gearwheel or a chain sprocket are necessary to take-off the power from the rotor, because there should be accessible openings for the supply and drain of the cooling media on both shaft ends on rotor rotational axis.

In order to realize an operation of the hysteresis motor-brake with high efficiency, a method according to the present invention is provided with steps of claim 12. They are as following:
- if the motor-brake operates in the driving mode, the rotational speed of the stator field equals to the rotational speed of the rotor, wherein the motor flux is controlled by at least periodically applied flux current component to the stator;
- if the motor-brake operates in the braking mode, and the output electric power does not exceed instant power consumption from the DC link, the rotational speed of the stator field equals to the rotational speed of the rotor, wherein the motor flux is controlled by at least periodically applied flux current component to the stator;
- if the motor-brake operates in the braking mode, and the potential output electric power at synchronous speed of the stator field and the rotor exceeds instant power consumption from the DC link, the rotational speed of the stator field is maintained lower than the rotational speed of the rotor, wherein the actual output electric power of the motor-brake does not exceed instant power consumption from the DC link at maintained speed;
wherein the cooling media is fed through the channel in the rotor at least in case if the motor-brake operates in the braking mode, and the potential output electric power at synchronous speed of the stator field and the rotor exceeds instant power consumption from the DC link.

High efficiency at driving and regenerative braking modes may be achieved in case of over excitation of the motor-brake. The short time periodic pulses of positive flux (I_{d}) current are applied to the stator in order to magnetize the rotor. After magnetization, the flux component (I_{d}) of the current is released, thus reducing stator losses and improving power factor of the motor-brake. When the speed increases, and the back-EMF gets closer to max inverter output voltage, the short time periodic pulses of negative flux (I_{d}) current are applied to the stator in order to demagnetize the rotor. The torque in synchronous modes is provided by field magnet component, which is proportional to motor flux and torque current (I_{d}) component.

When the required braking power exceeds maximum capacity of the motor-brake in synchronous mode, the stator field rotational speed (proportional to inverter output frequency) should be limited. The electromagnetic power is limited in this way, because it is proportional to the field rotational speed. The difference between shaft power and stator electromagnetic power is dissipated in the rotor core and evacuated by the cooling media.

The torque in asynchronous modes is provided by sum of the hysteresis torque and eddy-current torque. The hysteresis torque is proportional to minor hysteresis loop area of the rotor core material, which depends on the stator flux and does not depend on slip. The eddy-current torque is slip-dependent. Both torque components in asynchronous modes depend on stator current, and may be controlled by changing said current. The max torque in asynchronous mode is higher than in synchronous mode, because the remanence flux produced by rotor in synchronous mode (without magnetization from the stator current) is lower, than in asynchronous mode (with magnetization). The influence of the eddy current on resulting torque depends on design parameters, magnetomotive force and slip speed.

The invention is explained below in closer detail by reference to the drawings, wherein:
- Fig. 1: is a schematic illustration of a 6-speed 2.5-shaft torque-filled transmission with a hysteresis motor-brake according to the invention;
- Fig. 2: shows three-quarter section view of the hysteresis motor-brake according to the invention;
- Fig. 3: shows a cross-section view of the hysteresis motor-brake;
- Fig. 4: shows an oblique projection of a rotor of the hysteresis motor-brake; and
- Fig. 5: shows a speed-torque diagram including operation modes of the hysteresis motor-brake.

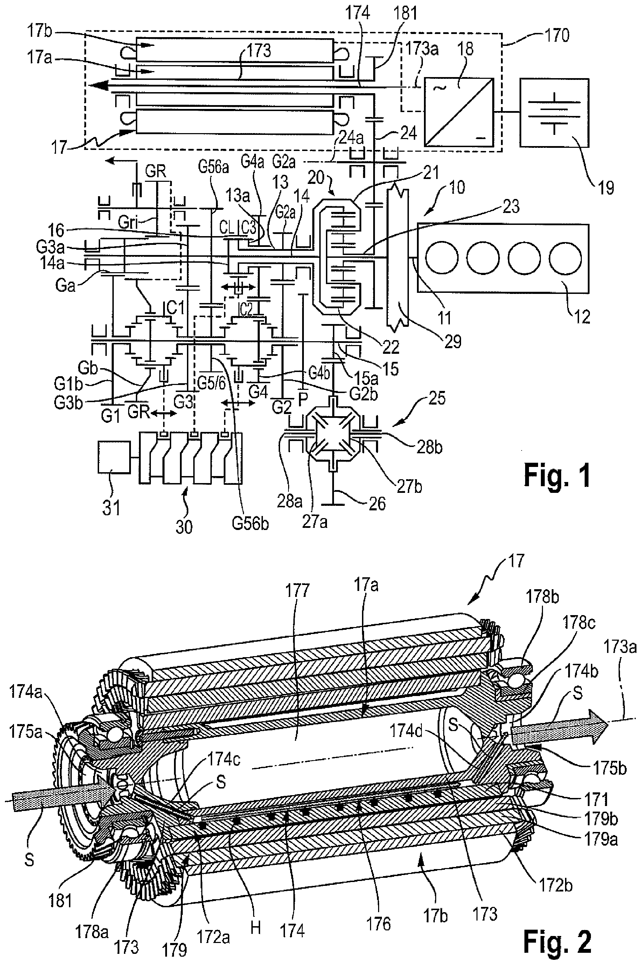

Fig. 1 shows a 6 speed 2.5-shaft torque-filled transmission 10 with start/stop capability for a vehicle comprising an input shaft 11 attached to a prime mover 12, for example a combustion engine, a first driveshaft 13 and a second driveshaft 14, wherein the driveshafts 13, 14 are arranged concentrically. In the embodiment shown in Fig. 1 the second driveshaft 14 is mounted internally through the first driveshaft 13.

The first driveshaft 13 comprises a plurality of driving gearwheels G2a, G4a for 2^{nd} and 4^{th} speeds G2, G4, meshing with corresponding driven gearwheels G2b and G4b of a driven shaft 15. The second driveshaft 14 has a plurality of driving gearwheels Ga, G3a and G56a for reverse gear, 1^{st}, 3^{rd}, 5^{th}/6^{th} speeds GR, G1, G3, G56, meshing with corresponding driven gearwheels Gb, G1b, G3b and G56b of the driven shaft 15.

The gearwheels G4a, G1b, G2b, G3b, G56b for forward speeds are engageable to said shafts 13, 14; 15 with clutches C1, C2, C3 forming a power flow from the driveshafts 13, 14 to the driven shaft 15 with different ratios.

At least two gearwheels Gb, G2b for forward speeds are rotationally fixed on the driven shaft 15 in a way that each of them is located between a pair of loose gearwheels G1b, G3b; G56b, G2b, wherein the corresponding double-sided clutches C1, C2, which engage said loose gearwheels G1b, G3b; G56b, G2b to the driven shaft 15, are also rotationally fixed on the driven shaft 15, and the dog teeth for alternative engagement of the gearwheels G1b, G3b; G56b, G2b and G1b are arranged on both sides of the corresponding fixed gearwheels Gb, G2b.

The transmission 10 comprises an AC current electric machine 17 with a squirrel caged rotor 17a and a stator 17b, wherein the windings 179 of the stator 17b are connected to a multi-phase bi-directional AC power converter 18 and a DC-link 19, i.e. a battery, e.g., a low-voltage 12V battery, via fixed electrical connection. The rotor 17a comprises means for forced cooling, e.g. at least one cooling channel 174 for liquid cooling. The converter 18 is designed to handle about 3 to 20% of rated power of the prime mover 12.

Further the transmission 10 comprises a planetary gearset 20 with three links 21, 22, 23, wherein the first link 21, e.g. a planet carrier, is connected to the first driveshaft 13 and the input shaft 11, the second link 22, e.g. a ring gear, is connected to the second driveshaft 14, and third link 23, e.g. a sun gear, is cinematically connected to a driving member 181 of the rotor 17a of the electric machine 17 via a cylindrical geartrain 24 (driven member), and the axis 173a of the rotor 17a is placed apart from the axis of the input shaft 11. The axis 24a of the geartrain 24 is placed apart from the axis 173a of the rotor 17a. A speed ratio between the second link 22 and the third link 23 is negative for stopped first link 21.

A controllable lock-up clutch CL is arranged between the driving gears on the driveshafts 13, 14, and connects said driveshafts 13, 14 with each other. Reference numerals 13a and 14a indicate the splines for torque transfer from a shifting sleeve of the lock-up clutch CL. In the embodiment shown in the Fig. 1 the lock-up clutch CL is integrated in clutch C3. In detail the lock-up clutch CL and the clutch C3 engage the pinion 13a with the first driveshaft 13 and share a common shifting sleeve 16.

A gearwheel 26 of a differential 25 constantly meshes with a pinion 15a on the driven shaft 15. Driven links 27a, 27b of the differential 25 are connected to output shafts 28a, 28b of the transmission 10. The axis of the gearwheel 26 may be arranged parallel or not parallel to the axis of the input shaft 11. The gearing 15a, 26 may be embodied as cylindrical or bevel, respectively.

In all embodiments the clutches C1, C2, C3 and CL may be designed as simple dog clutches or as dog clutches with synchronizers. A vibration-damping device 29 (e.g. dual-mass flywheel) may be arranged on the input shaft 11.

The clutches C1, C2 are embodied in a way that each of them can alternatively connect two loose gearwheels G1b, G3b; G56b, G2b to the output shaft 15, and wherein said gearwheels G1b, G3b; G56b, G2b are arranged on opposite sides of the gearwheels Gb; G2b which are rotationally fixed to the output shaft 15.

In the embodiment shown in Fig. 1 the first clutch C1 is through-mounted on the corresponding driven gearwheel Gb, wherein said driven gearwheel Gb is rigidly fixed on the driven shaft 15. Further the second clutch C2 is through-mounted on the corresponding driven gearwheel G2b, wherein said driven gearwheel G2b is rigidly fixed on the driven shaft 15.

The clutches C1, C2, C3 are engaged by a single shifting drum 30, which is electrically driven by a motor 31. The reverse idler gearwheel GRi is engaged by a separate electric actuator or by mechanical drive linked to the hand-operated shifting lever (not shown in the Figs.).

The transmission 10 may optionally comprise park ratchet wheel P, rigidly mounted on the driven shaft 15.

The invention relates to the hysteresis motor-brake 170 indicated with dashed lines in Fig.1, comprising the rotating electric machine 17 mentioned above with rotor 17a and stator 17b, and the power converter 18, electrically connecting the stator 17b of said electric machine 17 to the DC link 19. The power converter 18 comprises a three-phase voltage-source inverter.

As shown in Fig. 2 the rotor 17a is concentrically arranged within a bore 171 of said stator 17b, and comprises a core 172a, made of hard magnetic material, e.g. Alnico alloy, and a rotor shaft 173, connected to each other with capability of torque transfer. The rotor 17a comprises at least one channel 174 for a cooling media with at least one inlet 174a at a first shaft end 175a, made of steel, and at least one outlet 174b at a second shaft end 175b, e.g. made of Al alloy. The cooling media of the rotor 17a may be a transmission oil. The flow of the cooling media trough the channels 174 is indicated with arrows S in Fig. 2.

The inlet 174a and outlet 174b are arranged concentrically to the shaft axis 173a, wherein said inlet 174a and outlet 174b are hydraulically connected to a cooling jacket 176 by pluralities of diagonal bores 174c, 174d, arranged around shaft axis 173a. The annular cooling jacket 176 is arranged on the radial surface of the rotor shaft 173.

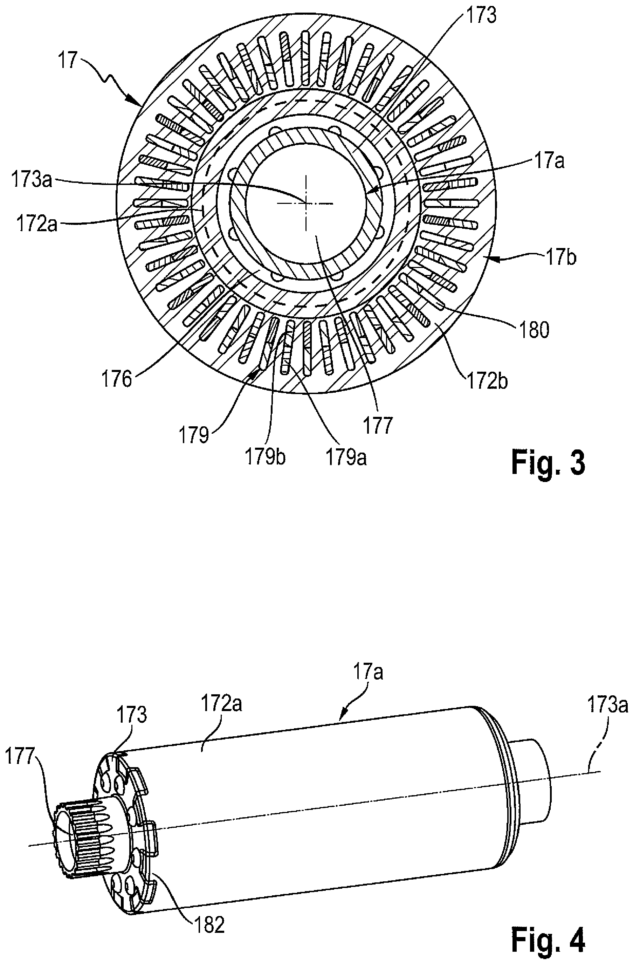

The rotor core 172a is formed as a tube, wherein the tube consists of anisotropic hard magnetic material. The magnetic domains are oriented in a way that highest coercive force is directed along rotor circumference. As shown in Fig. 4, the rotor core 172a comprises a plurality of teeth 182 on the first shaft end 175a of the tube, wherein the rotor core 172a is connected to the shaft 173 in a positive locking manner for torque transfer. The rotor core 172a is mounted on the shaft 173 in a way that the cooling media from the cooling jacket 176 directly contacts to the inner surface of the rotor core 172a to enable heat transfer from rotor core 172a, as indicated in Fig. 2 by small arrows H. The ends of the rotor core 172a seal the cooling jacket 176 on both sides.

The rotor shaft 173 further comprises a separated air cavity 177 formed around its axis. The cavity 177 is sealed from the annular rotor cooling jacket 176.

The rotor shaft 173 further comprises a pair of the bearings 178a, 178b mounted on it, and positioning the rotor 17a in the stator bore 171. The bearing 178b on the shaft side with the outlet 174b is mounted by the means of a separation sleeve 178c, made of the material with lower heat conductivity than of the steel, e.g. polyamide or ceramics.

The stator 17b comprises a core 172b made of soft magnetic material and a plurality of coils 179a connected to said power converter 18 with opportunity of forming a multi-pole rotatable magnetic field in the stator bore 171.

The stator 17b comprises semi-closed radial slots 180, the stator windings 179 are arranged as a double layer. As shown in Fig. 3, the coils 179a, 179b of the stator 17b are formed from rectangular copper wire.

The hysteresis motor-brake 170 further comprises a torque transfer device with a driving member 181 fixed on the rotor shaft 173, intended to be engaged with a driven member, e.g., the cylindrical geartrain 24. The rotational axis 24a (Fig. 1) of the driven member is placed apart from the shaft axis 173a of the rotor 17a. The driving member 181 and the driven member for example are configured as gearwheel or sprocket.

If the motor-brake 170 operates in a driving mode, the rotational speed of the stator field equals to the rotational speed of the rotor 17a. The motor flux is controlled by at least periodically applied flux current component I_{d} to the stator 17b.

If the motor-brake 170 operates in a braking mode, and the output electric power does not exceed instant power consumption from the DC link 19, the rotational speed of the stator field equals to the rotational speed of the rotor 17a, wherein the motor flux is controlled by at least periodically applied flux current component I_{d} to the stator 17b.

If the motor-brake 170 operates in the braking mode, and the potential output electric power at synchronous speed of the stator field and the rotor 17a exceeds instant power consumption from the DC link 19, the rotational speed of the stator field is maintained lower than the rotational speed of the rotor 17a, wherein the actual output electric power of the motor-brake 170 does not exceed instant power consumption from the DC link 19 at maintained speed.

The cooling media is fed through the channel 174 in the rotor 17a at least in case if the motor-brake 170 operates in the braking mode, and the potential output electric power at synchronous speed of the stator field and the rotor 17a exceeds instant power consumption from the DC link 19.

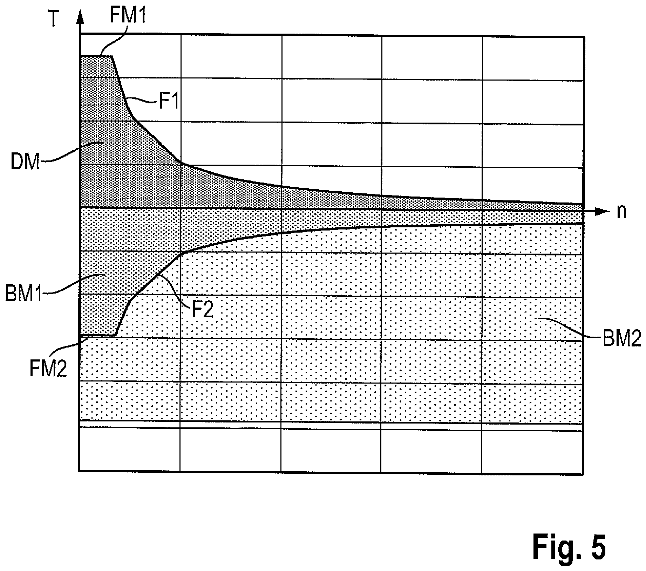

Fig. 5 show a speed n-torque T diagram for the hysteresis motor-brake 170, with a synchronous driving mode DM, a synchronous regenerative braking mode BM1 and an asynchronous braking mode BM2. F1 and F2 indicate power limitation in flux weakened area, due to DC voltage limitation. FM1 and FM2 indicate the maximal remanence flux. Maximal torque is limited by the maximal remanence flux and stator reaction, which demagnetize the rotor.

High efficiency at driving and regenerative braking modes DM, BM1 may be achieved in case of over excitation of the motor-brake 170. The short time periodic pulses of positive flux I_{d} current are applied to the stator 17b in order to magnetize the rotor 17a. After magnetization, the positive flux current I_{d} component may be released, thus reducing stator losses and improving power factor of the motor-brake 170. When the speed n increases, and the back-EMF gets closer to maximal inverter output voltage, the short time periodic pulses of negative flux current I_{d} are applied to the stator 17b in order to demagnetize the rotor 17a. The torque T in synchronous modes is provided by field magnet component, which is proportional to motor flux and torque current component I_{d}.

When the required braking power exceeds maximum capacity of the motor-brake 170 in synchronous regenerative braking mode BM1, the stator field rotational speed (proportional to inverter output frequency) should be limited. The back-EMF and electromagnetic power are limited in this way, because they are proportional to the field rotational speed. The difference between shaft power and stator electromagnetic power is dissipated in the rotor core 172a and evacuated by the cooling media.

The torque in asynchronous braking modes BM2 is provided by sum of the hysteresis torque and eddy-current torque. The hysteresis torque is proportional to minor hysteresis loop area of the rotor core material, and does not depend on slip. The eddy-current torque is slip-dependent. Both torque components in asynchronous modes depend on stator current, and may be controlled by changing said current. The maximal torque in asynchronous mode BM2 is higher than in synchronous mode BM1, because the remanence flux in synchronous mode (without magnetization from the stator current) BM1 is lower, than in asynchronous mode (with magnetization) BM2. The influence of the eddy current on resulting torque depends on design parameters, magnetomotive force and slip speed, and is not shown in Fig. 5.

## Claims

1. A motor-brake (170), comprising a rotating electric machine (17) with rotor (17a) and a stator (17b), and a power converter (18), electrically connecting the stator (17b) of said electric machine (17) to a DC link (19), wherein
- said stator (17b) comprises a core (172b) made of soft magnetic material and a plurality of coils (179a) connected to said power converter (18) with opportunity of forming a multi-pole rotatable magnetic field in a stator bore (171);
- said rotor (17a) is concentrically arranged within the bore (171) of said stator (17b), and comprises a core (172a) and a shaft (173), connected to each other with capability of torque transfer; and
- said rotor shaft (173) comprises at least one channel (174) for cooling media with at least one inlet (174a) at a first shaft end (175a) and at least one outlet (174b) at a second shaft end (175b),
**characterised in that**
- the motor brake (170) is a hysteresis motor brake;
- the core (172a) of the rotor (17a) is made of hard magnetic material;
- the rotor shaft (173) comprises an annular cooling jacket (176) on its radial surface, and the rotor core (172a) is mounted on said rotor shaft (173) in a way that the cooling media from the cooling jacket (176) directly contacts to the inner surface of the rotor core (172a), wherein the ends of the rotor core (172a) seal said cooling jacket (176) on both sides; and
- said inlet (174a) and outlet (174b) are hydraulically connected to said cooling jacket (176) by pluralities of diagonal bores (174c, 174d).

2. The motor-brake (170) according to claim 1, **characterised in that** the stator (17b) comprises semi-closed slots (180), wherein at least one stator winding (179) is arranged in the slots (180).

3. The motor-brake (170) according to claim 1 or 2, **characterised in that** the stator winding (179) is double layer, and the coils (179a) of the winding (179) are formed from rectangular copper wire.

4. The motor-brake (170) according to one of the claims 1 to 3, **characterised in that** the power converter (18) comprises a three-phase voltage-source inverter.

5. The motor-brake (170) according to one of the claims 1 to 4, **characterised in that** the rotor cooling media is a transmission oil.

6. The motor-brake (170) according to one of the claims 1 to 5, **characterised in that** the rotor core (172a) is formed as a tube of an anisotropic hard magnetic material, wherein preferably magnetic domains of the magnetic material are oriented in a way that highest coercive force is directed along circumference of the rotor (17a).

7. The motor-brake (170) according to claim 6, **characterised in that** the rotor core (172a) comprises a plurality of teeth (182) for torque transfer on one of the ends of the tube.

8. The motor-brake (170) according to one of the claims 1 to 7, **characterised in that** said inlet (174a) and outlet (174b) being cylindrical and arranged concentric to a shaft axis (173a), wherein said pluralities of diagonal bores (174c, 174d) are arranged around the shaft axis (173a).

9. The motor-brake (170) according to one of the claims 1 to 8, **characterised in that** the rotor shaft (173) comprises a cavity (177) formed around its axis (173a) and sealed from the cooling jacket (176).

10. The motor-brake (170) according to one of the claims 1 to 8, **characterised in that** the rotor shaft (173) further comprises a pair of bearings (178a, 178b) mounted on it, and positioning the rotor (17a) in the stator bore (171), wherein preferably the bearing (178b) on the shaft side with the outlet (174b) is mounted by the means of a separation sleeve (178c), made of a material with lower heat conductivity than of steel.

11. The motor-brake (170) according to one of the claims 1 to 10, **characterised in that** it further comprises a torque transfer device with a driving member (181), preferably a gearwheel or sprocket, fixed on the rotor shaft (173).

12. A method for operating a hysteresis motor-brake (170), comprising a rotating electric machine (17) with a rotor (17a) and a stator (17b), and a power converter (18), electrically connecting the stator (17b) of said electric machine (17) to a DC link (19), wherein
- said stator (17b) comprises a core (172b) made of soft magnetic material and a plurality of coils (179a) connected to said power converter (18) with opportunity of forming a multi-pole rotatable magnetic field in a stator bore (171);
- said rotor (17a) is concentrically arranged within a bore (171) of said stator (17b), and comprises a core (172a) and a shaft (173), connected to each other with capability of torque transfer; and
- said rotor shaft (173) comprises at least one channel (174) for cooling media with at least one inlet (174a) at a first shaft end (175a) and at least one outlet (174b) at a second shaft end (175b), **characterised in that:**
• if the motor-brake (170) operates in a driving mode (DM), a rotational speed of a stator field equals to a rotational speed (n) of the rotor (17a), wherein a motor flux is controlled by at least periodically applied flux current component (I_{d}) to the stator (17b);
• if the motor-brake (170) operates in a braking mode (BM1, BM2), and an output electric power does not exceed instant power consumption from the DC link (19), the rotational speed of the stator field equals to the rotational speed (n) of the rotor (17a), wherein the motor flux is controlled by at least periodically applied flux current component (I_{d}) to the stator (17b);
• if the motor-brake (170) operates in the braking mode (BM1), and the potential output electric power at synchronous speed of the stator field and the rotor (17a) exceeds instant power consumption from the DC link (19), the rotational speed of the stator field is maintained lower than the rotational speed (n) of the rotor (17a), wherein the actual output electric power of the motor-brake (170) does not exceed instant power consumption from the DC link (19) at maintained speed;
wherein
- the motor brake (170) is a hysteresis motor brake;
- the core (172a) of the rotor (17a) is made of hard magnetic material;
- the rotor shaft (173) comprises an annular cooling jacket (176) on its radial surface, and the rotor core (172a) is mounted on said rotor shaft (173) in a way that the cooling media from the cooling jacket (176) directly contacts to the inner surface of the rotor core (172a), wherein the ends of the rotor core (172a) seal said cooling jacket (176) on both sides;
- wherein said inlet (174a) and outlet (174b) are hydraulically connected to said cooling jacket (176) by pluralities of diagonal bores (174c, 174d), and
wherein the cooling media is fed through the channel (174) in the rotor (17a) at least in case if the motor-brake (170) operates in the braking mode (BM1, BM2), and the potential output electric power at synchronous speed of the stator field and the rotor (17a) exceeds instant power consumption from the DC link (19).

## Patentansprüche

1. Motorbremse (170), umfassend eine rotierende elektrische Maschine (17) mit einem Rotor (17a) und einem Stator (17b), und einen Leistungswandler (18), der den Stator (17b) der elektrischen Maschine (17) mit einem DC-Glied (19) elektrisch verbindet, wobei:
- der Stator (17b) einen Kern (172b), der aus weichem magnetischen Material hergestellt wird, und eine Vielzahl von Spulen (179a) umfasst, die mit dem Leistungswandler (18) mit der Möglichkeit zum Bilden eines mehrpoligen drehbaren Magnetfelds in einer Statorbohrung (171) verbunden sind;
- der Rotor (17a) in der Bohrung (171) des Stators (17b) konzentrisch angeordnet ist, und einen Kern (172a) und eine Welle (173) umfasst, die miteinander mit der Fähigkeit einer Drehmomentübertragung verbunden sind; und
- die Rotorwelle (173) mindestens einen Kanal (174) für Kühlmedien mit mindestens einem Einlass (174a) an einem ersten Wellenende (175a) und mindestens einem Auslass (174b) an einem zweiten Wellenende (175b) umfasst,
**dadurch gekennzeichnet, dass**
- die Motorbremse (170) eine Hysteresemotorbremse ist;
- der Kern (172a) des Rotors (17a) aus hartem magnetischen Material hergestellt wird;
- die Rotorwelle (173) an ihrer radialen Fläche einen ringförmigen Kühlmantel (176) umfasst, und der Rotorkern (172a) an der Rotorwelle (173) auf eine Weise montiert ist, sodass das Kühlmedium von dem Kühlmantel (176) die innere Fläche des Rotorkerns (172a) direkt berührt, wobei die Enden des Rotorkerns (172a) den Kühlmantel (176) an beiden Seiten abdichten; und
- der Einlass (174a) und Auslass (174b) mit dem Kühlmantel (176) durch Vielzahlen von diagonalen Bohrungen (174c, 174d) hydraulisch verbunden sind.

2. Motorbremse (170) nach Anspruch 1, **dadurch gekennzeichnet, dass** der Stator (17b) halbgeschlossene Schlitze (180) umfasst, wobei mindestens eine Statorwicklung (179) in den Schlitzen (180) angeordnet ist.

3. Motorbremse (170) nach Anspruch 1 oder 2, **dadurch gekennzeichnet, dass** die Statorwicklung (179) doppelschichtig ist, und die Spulen (179a) der Wicklung (179) aus rechteckigem Kupferdraht gebildet werden.

4. Motorbremse (170) nach einem der Ansprüche 1 bis 3, **dadurch gekennzeichnet, dass** der Leistungswandler (18) einen dreiphasigen Spannungsquellenwechselrichter umfasst.

5. Motorbremse (170) nach einem der Ansprüche 1 bis 4, **dadurch gekennzeichnet, dass** das Rotorkühlmedium ein Getriebeöl ist.

6. Motorbremse (170) nach einem der Ansprüche 1 bis 5, **dadurch gekennzeichnet, dass** der Rotorkern (172a) als eine Röhre aus einem anisotropen harten magnetischen Material gebildet wird, wobei vorzugsweise magnetische Domänen des magnetischen Materials auf eine Weise ausgerichtet sind, sodass die höchste Koerzitivkraft entlang des Umfangs des Rotors (17a) gerichtet ist.

7. Motorbremse (170) nach Anspruch 6, **dadurch gekennzeichnet, dass** der Rotorkern (172a) eine Vielzahl von Zähnen (182) für die Drehmomentübertragung an einem der Enden der Röhre umfasst.

8. Motorbremse (170) nach einem der Ansprüche 1 bis 7, **dadurch gekennzeichnet, dass** der Einlass (174a) und Auslass (174b) zylindrisch sind und konzentrisch zu einer Wellenachse (173a) angeordnet sind, wobei die Vielzahlen von diagonalen Bohrungen (174c, 174d) um die Wellenachse (173a) angeordnet sind.

9. Motorbremse (170) nach einem der Ansprüche 1 bis 8, **dadurch gekennzeichnet, dass** die Rotorwelle (173) einen Hohlraum (177) umfasst, der um ihre Achse (173a) gebildet wird und von dem Kühlmantel (176) abgedichtet ist.

10. Motorbremse (170) nach einem der Ansprüche 1 bis 8, **dadurch gekennzeichnet, dass** die Rotorwelle (173) ferner ein Paar von Lagern (178a, 178b) umfasst, die daran montiert sind, und den Rotor (17a) in der Statorbohrung (171) positionieren, wobei das Lager (178b) auf der Wellenseite mit dem Auslass (174b) vorzugsweise mithilfe einer Trennhülse (178c) montiert ist, die aus einem Material mit einer geringeren Wärmeleitfähigkeit als Stahl hergestellt wird.

11. Motorbremse (170) nach einem der Ansprüche 1 bis 10, **dadurch gekennzeichnet, dass** sie ferner eine Drehmomentübertragungsvorrichtung mit einem Antriebselement (181), vorzugsweise ein Zahnrad oder Ritzel, umfasst, das an der Rotorwelle (173) montiert ist.

12. Verfahren zum Betrieb einer Hysteresemotorbremse (170), umfassend eine rotierende elektrische Maschine (17) mit einem Rotor (17a) und einem Stator (17b), und einen Leistungswandler (18), der den Stator (17b) der elektrischen Maschine (17) mit einem DC-Glied (19) elektrisch verbindet, wobei:
- der Stator (17b) einen Kern (172b), der aus weichem magnetischen Material hergestellt wird, und eine Vielzahl von Spulen (179a) umfasst, die mit dem Leistungswandler (18) mit der Möglichkeit zum Bilden eines mehrpoligen drehbaren Magnetfelds in einer Statorbohrung (171) verbunden sind;
- der Rotor (17a) in einer Bohrung (171) des Stators (17b) konzentrisch angeordnet ist, und einen Kern (172a) und eine Welle (173) umfasst, die miteinander mit der Fähigkeit einer Drehmomentübertragung verbunden sind; und
- die Rotorwelle (173) mindestens einen Kanal (174) für ein Kühlmedium mit mindestens einem Einlass (174a) an einem ersten Wellenende (175a) und mindestens einem Auslass (174b) an einem zweiten Wellenende (175b) umfasst,
**dadurch gekennzeichnet, dass**:
- wenn die Motorbremse (170) in einem Fahrmodus (DM) betrieben wird, eine Drehzahl eines Statorfelds einer Drehzahl (n) des Rotors (17a) entspricht, wobei ein Motorfluss durch eine zumindest periodisch angewendete Flussstromkomponente (I_{d}) zu dem Stator (17b) gesteuert wird;
- wenn die Motorbremse (170) in einem Bremsmodus (BM1, BM2) betrieben wird und eine ausgegebene elektrische Leistung nicht den momentanen Stromverbrauch von dem DC-Glied (19) übersteigt, die Drehzahl des Statorfelds der Drehzahl (n) des Rotors (17a) entspricht, wobei der Motorfluss durch eine zumindest periodisch angewendete Flussstromkomponente (I_{d}) zu dem Stator (17b) gesteuert wird;
- wenn die Motorbremse (170) in dem Bremsmodus (BM1) betrieben wird und die potenzielle ausgegebene elektrische Leistung bei synchroner Drehzahl des Statorfelds und des Rotors (17a) den unmittelbaren Stromverbrauch von der DC-Verbindung (19) übersteigt, die Drehzahl des Statorfelds niedriger gehalten wird als die Drehzahl (n) des Rotors (17a), wobei die tatsächlich ausgegebene elektrische Leistung der Motorbremse (170) bei gehaltener Drehzahl nicht den unmittelbaren Stromverbrauch von dem DC-Glied (19) übersteigt;
wobei
- die Motorbremse (170) eine Hysteresemotorbremse ist;
- der Kern (172a) des Rotors (17a) aus hartem magnetischen Material hergestellt wird;
- die Rotorwelle (173) an ihrer radialen Fläche einen ringförmigen Kühlmantel (176) umfasst und der Rotorkern (172a) an der Rotorwelle (173) auf eine Weise montiert ist, sodass das Kühlmedium von dem Kühlmantel (176) die innere Fläche des Rotorkerns (172a) direkt kontaktieren, wobei die Enden des Rotorkerns (172a) den Kühlmantel (176) an beiden Seiten abdichten;
- wobei der Einlass (174a) und Auslass (174b) mit dem Kühlmantel (176) durch Vielzahlen von diagonalen Bohrungen (174c, 174d) hydraulisch verbunden sind, und
wobei das Kühlmedium zumindest für den Fall, dass die Motorbremse (170) in dem Bremsmodus (BM1, BM2) betrieben wird, und die potenzielle ausgegebene elektrische Leistung bei synchroner Drehzahl des Statorfelds und des Rotors (17a) den unmittelbaren Stromverbrauch von der DC-Verbindung (19) übersteigt, durch den Kanal (174) in den Rotor (17a) zugeführt werden.

## Revendications

1. Frein moteur (170) comprenant une machine électrique mobile en rotation (17) ayant un rotor (17a) et un stator (17b) ainsi qu'un convertisseur de puissance (18) connectant électriquement le stator (17b) de la machine électrique (17) à une liaison à courant continu DC (19),
dans lequel :
- le stator (17b) comporte un noyau (172b) réalisé en un matériau magnétique doux et ayant une série de bobines (179a) connectées au convertisseur de puissance (18) avec l'opportunité de former un champ magnétique mobile en rotation multipolaire dans un perçage du stator (171),
- le rotor (17a) est installé concentriquement dans le perçage (171) du stator (17b) et comprend un noyau (172a) et un arbre (173) connectés l'un à l'autre avec une aptitude de transfert de couple, et
- l'arbre du rotor (173) comprend au moins un canal (174) pour un fluide de refroidissement ayant au moins une entrée (174a) située au niveau d'une première extrémité de l'arbre (175a) et au moins une sortie (174b) située au niveau de la seconde extrémité de l'arbre (175b),
**caractérisé en ce que**
- le frein moteur (170) est un frein moteur à hystérésis,
- le noyau (172a) du rotor (17a) est réalisé en un matériau magnétique dur,
- l'arbre du rotor (173) comporte une enveloppe de refroidissement annulaire (176) située sur sa surface radiale et le noyau du rotor (172a) est monté sur l'arbre du rotor (173) de sorte que le fluide de refroidissement provenant de l'enveloppe de refroidissement (176) vienne directement en contact avec la surface interne du noyau du rotor (172a), les extrémités du noyau du rotor (172a) assurant l'étanchéité de l'enveloppe de refroidissement (176) des deux côtés, et
- l'entrée (174a) et la sortie (174b) sont connectées hydrauliquement à l'enveloppe de refroidissement (176) par une série de perçages diagonaux (174c, 174d).

2. Frein moteur (170) conforme à la revendication 1,
**caractérisé en ce que**
le stator (17b) comporte des fentes semi-fermées (180), au moins un enroulement de stator (179) étant installé dans ces fentes (180).

3. Frein moteur (170) conforme à la revendication 1 ou 2,
**caractérisé en ce que**
l'enroulement de stator (179) est un double enroulement et les bobines (179a) de l'enroulement (179) sont formées à partir d'un fil de cuivre rectangulaire.

4. Frein moteur (170) conforme à l'une des revendications 1 à 3,
**caractérisé en ce que**
le convertisseur de puissance (18) est un inverseur de source de tension triphasée.

5. Frein moteur (170) conforme à l'une des revendications 1 à 4,
**caractérisé en ce que**
le fluide de refroidissement du rotor est une huile de transmission.

6. Frein moteur (170) conforme à l'une des revendications 1 à 5,
**caractérisé en ce que**
le noyau du rotor (172a) est réalisé sous la forme d'un tube en un matériau magnétique dur anisotrope, et de préférence, les domaines magnétiques de ce matériau magnétique sont orientés de sorte que la force coercitive la plus élevée soit dirigée le long de la circonférence du rotor (17a).

7. Frein moteur (170) conforme à la revendication 6,
**caractérisé en ce que**
le noyau du rotor (172a) comporte une série de dents (182) pour permettre un transfert de couple sur l'une des extrémités du tube.

8. Frein moteur (170) conforme à l'une des revendications 1 à 7,
**caractérisé en ce que**
l'entrée (174a) et la sortie (174b) sont cylindriques et situées concentriquement à l'axe (173a) de l'arbre, les perçages diagonaux de la série de perçages diagonaux (174c, 174d) étant situés autour de l'axe de l'arbre (173a).

9. Frein moteur (170) conforme à l'une des revendications 1 à 8,
**caractérisé en ce que**
l'arbre du rotor (173) comporte une cavité (177) formée autour de son axe (173a) et étanche par rapport à l'enveloppe de refroidissement (176).

10. Frein moteur (170) conforme à l'une des revendications 1 à 8,
**caractérisé en ce que**
l'arbre du rotor (173) comporte en outre une paire de paliers (178a, 178b) montés sur celui-ci et permettant de positionner le rotor (17a) dans le perçage du stator (171), et de préférence, le palier (178b) situé sur le côté de l'arbre comprenant la sortie (174b) est montés au moyen d'un manchon de séparation (178c) réalisé en un matériau ayant une conductivité thermique inférieure à celle de l'acier.

11. Frein moteur (170) conforme à l'une des revendications 1 à 10,
**caractérisé en ce qu'**
il comporte en outre un dispositif de transfert de couple ayant un élément d'entraînement (181), de préférence, une roue d'engrenage ou un pignon fixé sur l'arbre du rotor (173).

12. Procédé permettant de faire fonctionner un frein moteur à hystérésis (170), comprenant une machine électrique mobile en rotation (17) ayant un rotor (17a) et un stator (17b) ainsi qu'un convertisseur de puissance (18) connectant électriquement le stator (17b) de la machine électrique (17) à une ligne DC (19), selon lequel :
- le stator (17b) comporte un noyau (172b) réalisé en un matériau magnétique doux et une série de bobines (179a) reliées au convertisseur de puissance (18) avec la possibilité de former un champ magnétique mobile en rotation multipolaire dans un perçage du stator (171),
- le rotor (17a) est monté concentriquement dans un perçage (171) du stator (17b) et comprend un noyau (172a) et un arbre (173) reliés l'un à l'autre avec une possibilité de transfert de couple, et
- l'arbre du rotor (173) comprend au moins un canal (174) pour un fluide de refroidissement ayant au moins une entrée (174a) située au niveau d'une première extrémité de l'arbre (175a) et au moins une sortie (174b) située au niveau de la seconde extrémité d l'arbre (175b),
**caractérisé en ce que**
• si le frein moteur (170) fonctionne selon un mode d'entraînement (DM), la vitesse de rotation du champ du stator est égale à la vitesse de rotation (n) du rotor (17a), le flux du moteur étant commandé par une composante du courant de flux (I_{d}) appliqué au moins périodiquement au stator (17b),
• si le frein moteur (170) fonctionne selon un mode de freinage (BM1, BM2) et que la puissance électrique délivrée en sortie ne dépasse pas la consommation de puissance instantanée provenant de la ligne DC (19), la vitesse de rotation du champ du stator est égale à la vitesse de rotation (n) du rotor (17a), le flux du moteur étant commandé par une composante du courant de flux (I_{d}) appliqué au moins périodiquement au stator (17b),
• si le frein moteur (170) fonctionne selon le mode de freinage (BM1), et que la puissance électrique délivrée en sortie potentielle à une vitesse synchrone du champ du stator et du rotor (17a) dépasse la consommation de puissance instantanée provenant de la ligne DC (19), la vitesse de rotation du champ du stator est maintenue au-dessous de la vitesse de rotation (n) du rotor (17a), la puissance électrique délivrée en sortie actuelle du frein moteur (170) ne dépassant pas la consommation de puissance instantanée provenant de la ligne DC (19) à la vitesse maintenue,
- le frein moteur (170) étant un frein moteur à hystérésis,
- le noyau (172a) du rotor (17a) étant réalisé en un matériau magnétique dur,
- l'arbre du rotor (173) comprenant une enveloppe de refroidissement annulaire (176) située sur sa surface radiale et le noyau du rotor (172a) étant monté sur l'arbre du rotor (173) de sorte que le fluide de refroidissement provenant de l'enveloppe de refroidissement (176) vienne directement en contact avec la surface interne du noyau du rotor (172a), les extrémités du noyau du rotor (172a) assurant l'étanchéité de l'enveloppe de refroidissement (176) des deux extrémités,
- l'entrée (174a) et la sortie (174b) étant hydrauliquement reliées à l'enveloppe de refroidissement (176) par une série de perçages diagonaux (174c, 174d), et
le fluide de refroidissement étant fourni par le canal (174) situé dans le rotor (17a) au moins lorsque le frein moteur (170) fonctionne selon le mode de freinage (BM1, BM2) et que la puissance électrique délivrée en sortie potentielle à la vitesse synchrone du champ du stator et du rotor (17a) dépasse la consommation de puissance instantanée provenant de la ligne DC (19).
